Europäisches Patentamt

European Patent Office

Office européen des brevets

(11) Veröffentlichungsnummer: **0 243 425**
**B1**

(12) **EUROPÄISCHE PATENTSCHRIFT**

(45) Veröffentlichungstag der Patentschrift: **12.12.90**

(51) Int. Cl.⁵: **H 02 K 21/24**

(21) Anmeldenummer: **86906306.5**

(22) Anmeldetag: **09.10.86**

(86) Internationale Anmeldenummer:
**PCT/EP86/00581**

(87) Internationale Veröffentlichungsnummer:
**WO 87/02525 23.04.87 Gazette 87/09**

(54) STROMRICHTERGESPEISTE SYNCHRONMASCHINE MIT PERMANENTMAGNET-ERREGUNG.

(30) Priorität: **12.10.85 DE 3536538**
**30.01.86 DE 3602687**

(43) Veröffentlichungstag der Anmeldung:
**04.11.87 Patentblatt 87/45**

(45) Bekanntmachung des Hinweises auf die
Patenterteilung:
**12.12.90 Patentblatt 90/50**

(84) Benannte Vertragsstaaten:
**CH DE FR GB LI**

(56) Entgegenhaltungen:
**WO-A-80/02203**
**DE-A-3 338 028**
**FR-A-1 271 765**
**GB-A-2 067 025**
**GB-A-2 139 823**
**US-A-3 330 975**
**US-A-3 700 942**
**US-A-3 786 291**

(73) Patentinhaber: **Weh, Herbert, Prof. Dr.**
**Wöhlerstrasse 20**
**D-3300 Braunschweig (DE)**

(72) Erfinder: **MAY, Hardo**
**Gleiwitzstr. 36**
**D-3300 Braunschweig (DE)**
Erfinder: **Weh, Herbert, Prof.Dr.**
**Wöhlerstr. 20**
**D-3300 Braunschweig (DE)**

(74) Vertreter: **Gralfs, Harro, Dipl.-Ing.**
**Am Bürgerpark 8**
**D-3300 Braunschweig (DE)**

Courier Press, Leamington Spa, England.

**Beschreibung**

Die Erfindung bezieht sich auf eine stromrichtergespeiste Synchronmaschine mit Permanentmagneterregung nach dem Oberbegriff des unabhängigen Patentanspruches.

Stromrichtergespeiste Synchronmaschinen gemäss dem Oberbegriff des unabhängigen Patentanspruches sind als Kleinmotoren bekannt. In der US—A—3 330 975, ist eine rotierende Synchronmaschine mit einem koaxialen Nutzspalt beschrieben, in dem die am Rotor befestigten Permanentmagnete umlaufen, die mit abwechselnder Polarität im Abstand voneinander angeordnet sind.

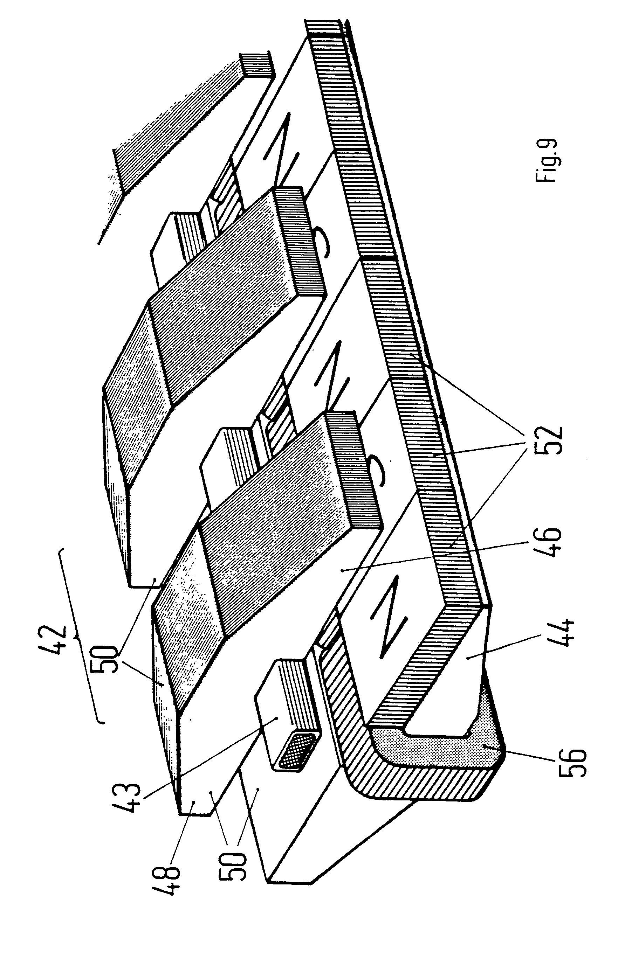

Derartige Maschinen, die auch mit radialem Nutzspalt bekannt sind (US—A—3 330 975, Fig. 9 bis 10, und FR—A—1 271 735) arbeiten mit einem Magnetfluß, dessen den Vortrieb erzeugende Komponente im wesentlichen longitudinal in Bewegungsrichtung geführt ist. Die bekannten Maschinen sind typische Kleinmotoren sehr geringer Leistung.

Es sind weiter asynchrone Linearmotoren mit einer Reaktionsschiene und einem Stator bekannt, die mit transversaler Magnetflußführung arbeiten, bei denen innerhalb der Motorbreite Nord- und Südpol des magnetischen Feldes nebeneinanderliegen und sich in der Reaktionsschiene zwei Stromwirbel nebeneinander ausbilden. Diese Ausführungsform ermöglicht eine von der Polteilung unabhängige Größe des Jochflusses und damit der Jochhöhe (Proc. IEE Vol. 118, Nr. 12, Dezember 1971, Seiten 1761 bis 1767, und Vol. 120, Nr 3, März 1973, Seiten 337 bis 343).

Aufgabe der Erfindung ist es eine stromrichtergespeiste Synchronmaschine mit Permanentmagneterregung so auszugestalten, daß bei einfachem mechanischen Aufbau hohe Kraftdichten, geringe Polteilungen und gleichzeitig niedrige Wicklungsverluste erreichbar sind.

Diese Aufgabe wird gemäß der Erfindung gelöst durch die im kennzeichnenden Teil des unabhängigen Patentanspruches herausgestellten Merkmale.

Zweckmäßige Ausgestaltungen der Erfindung sind Gegenstand der abhängigen ansprüche.

Die Erfindung ist in der Zeichnung in verschiedenen Ausführungsformen veranschaulicht und nachstehend unter Bezug auf die Zeichnung im einzelnen beschrieben. Es zeigen:

Fig. 1 das Prinzip der Synchronmaschine mit transversaler Flußrichtung.

Fig. 2 eine weitere Ausgestaltung des Prinzips nach Fig. 1.

Fig. 3 im Axialschnitt eine rotierende Synchronmaschine mit zwei Scheibenläufern.

Fig. 4 eine Teilansicht der Maschine nach Fig. 3 in Achsrichtung gesehen.

Fig. 5 in einem Axialschnitt eine rotierende Maschine mit einem scheibenförmigen Rotor in einer weiteren Ausführungsform.

Fig. 6 in einem Ausschnitt eine axiale Ansicht der Maschine nach Fig. 5 von links gesehen.

Fig. 6a eine Schaltung einer Synchronmaschine nach Fig. 5 und 6 mit einem Wechselrichter.

Fig. 6b den Stromverlauf in den Wicklungssträngen.

Fig. 7 eine weitere Ausführungsform einer Maschine, ähnlich der nach Fig. 5 im Axialschnitt.

Fig. 8 einen Ausschnitt einer axialen Ansicht der Maschine nach Fig. 7 von links gesehen.

Fig. 9 in isometrischer Darstellung eine Ausführungsform eines Linearantriebes.

Fig. 10 bis 12 teilweise im Schnitt in isometrischer Darstellung weitere Ausführungsformen von Linearantrieben.

Fig. 13 eine Stirnansicht der Polelemente bei einer Ausführungsform ähnlich der nach Fig. 12.

Fig. 14 eine Stirnansicht der Polelemente der Ausführungsform nach Fig. 11.

Fig. 15 im Querschnitt eine weitere Ausführungsform eines Antriebes.

Fig. 16 im Axialschnitt eine weitere Ausführungsform einer rotierenden Maschine.

Fig. 17 in einem Ausschnitt die Endverbindung der Wicklungsstränge bei der Maschine nach Fig. 16.

Fur die im nachstehenden zu beschreibenden Ausführungsformen gilt grundsätzlich folgendes. Der magnetische Kreis ist mit seiner Flußrichtung senkrecht zur Bewegungskoordinate angeordnet. Die Flußrichtung ist also transversal. Die stromführenden Leiter, in denen bei Bewegung die induzierte Spannung entsteht, verlaufen in der Ebene der Bewegungsrichtung. Abweichend von den bekannten Maschinenausführungen mit longitudinaler Flußrichtung kann durch die Zahl der Polelemente eine Vervielfachung der induzierten Spannung erreicht werden, ohne daß der Spulenquerschnitt und die Spulenlänge der Ankerwicklung geändert werden mußte.

Eine besonders wirksame Kraftbildung bzw. bei gegebener Geschwindigkeit eine hohe induzierte Spannung ergibt sich durch die Verwendung von energiestarken Permanentmagneten im beweglichen Teil.

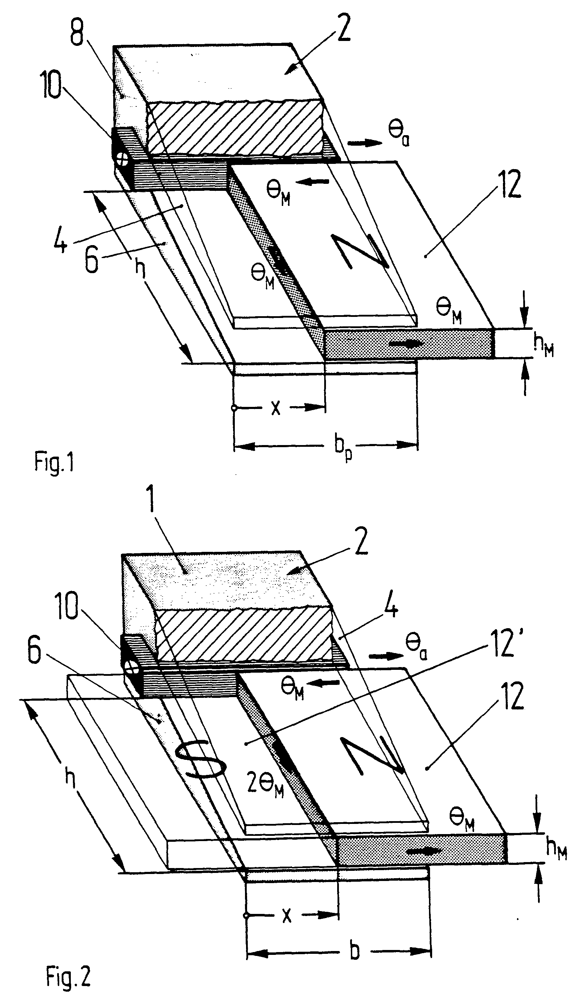

Das Prinzip der Synchronmaschine mit einem Erregerteil mit Permanentmagneten und transversalem Magnetfluß ist in Fig. 1 dargestellt. Gezeigt ist ein Polelement einer Synchronmaschine, das aus Weicheisen besteht. Das Polelement 2 weist zwei Polschenkel 4, 6 auf, die eine Breite b und eine Höhe h haben. Im Jochteil 8 des Polelementes ist in einer Nut ein stromführender Leiter 10 untergebracht, der in Bewegungsrichtung stromführend ist. Das Polelement 2 ist im feststehenden Teil der Maschine angeordnet. Teil der beweglichen Anordnung der Maschine sind Permanentmagnete, von denen hier ein Magnet 12 dargestellt ist. Der Permanentmagnet hat eine Höhe $h_M$, die dem Abstand der beiden parallel zueinander liegenden Flächen auf den einander zugewandten Seiten der Schenkel 4 und 6 des Polelementes 2 entspricht zuzüglich dem Nutzspalt. Der Permanentmagnet ist in ebener Anordnung angeordnet. Der Magnetfluß verläuft also zwischen den beiden Schenkeln 4 und 6 der Polelemente. Der Permanentmagnet 12 gehört entweder zum Läufer einer rotierenden elektrischen Maschine oder zu einem Translator eines Linearantriebes. Der Permanentmagnet hat eine Breite, die im wesentlichen der Breite b der Schenkel 4 und 6 entspricht und eine Höhe, die im wesentlichen der Höhe h der Schenkel entspricht.

Der Permanentmagnet bewirkt innerhalb des Luftspaltraumes die magnetische Flußdichte $B_o$. Mit der Bewegung des Magneten in Richtung des Pfeiles x nimmt auch der Abstand x der Magnetkante vom Außenrand des magnetischen Kreises zu. Der vom Magnetkreis aufgenommene magnetische Fluß ist proportional b—x und somit der überdeckten flußführenden Fläche. Die in dem Leiter 10 des Ankermagnetkreises vom Fluß des Magneten induzierte Spanung ist der Änderung des magnetischen Flusses proportional und wird somit zu $B_o \cdot h \cdot v$ bestimmt. Hierin ist h die Ausdehnung des magnetischen Feldes, hier die Schenkelhöhe, und v die Bewegungsgeschwindigkeit des Magneten gegenüber dem Anker. Die induzierte Spannung behält ihren konstanten Wert bis zum Punkt x=b.

Ordnet man x=o im Bewegungsablauf des Magneten beim Austritt aus dem Ankerkreis einen negativen Wert der induzierten Spannung zu, so zeigt eine analoge Überlegung für den Eintrittsvorgang, daß dabei die induzierte Spannung dem Betrag nach gleich groß, aber mit umgekehrten Vorzeichen auftritt. Mit der beschriebenen Ermittlung der induzierten Spannung kann dem Energiesatz entsprechend auch die Kraftwirkung als bekannt angesehen werden.

In Übereinstimmung mit Fig. 1 läßt sich der Betrag der Kraft $F_x$ angeben zu

$$F_x = h\, B_o \theta_a.$$

$\theta_a$ bedeutet die Summe der Ankerströme im Leiter 10 der Ankerspule 2 (Ankerdurchflutung). $F_x$ behält einen auch dem Vorzeichen nach gleichbleibenden Wert, wenn beim Eintreten einer Magnetkante in den Eisenbereich jeweils die Richtung der Ankerströme umgekehrt wird (Kommutierung). Die hierdurch erfaßte Wechselstrom-Anordnung mit rechteckförmigem Stromverlauf setzt in x-Richtung (Bewegungsrichtung) gleiche Längen für Magnete und die Polschenkel der transversalen Ankerelemente sowie eine sehr schnelle Stromänderung im Vergleich zur Bewegung voraus. Nach einem Weicheisenelement ist für die Anordnung nach Fig. 1 jeweils eine Lücke mit gleicher Breite b vorhanden; ähnliches gilt für die Magnete im beweglichen Teil.

Es sind dabei verschiedene Ausführungsformen der Ankerwicklung möglich. Gemeinsam ist diesen, daß die Spulenachsen mit der Richtung der Flußführung übereinstimmen, also auch senkrecht auf der Bewegungsrichtung stehen. Das beschriebene Modell läßt sich somit im mehreren anwendungsgerechten Versionen realisieren und kann grundsätzlich für rotierende oder lineare Bewegungen genutzt werden. Für das bewegliche Teil gilt, daß die Magnete in gleicher Teilung angeordnet werden.

Um eine hohe induzierte Spannung bzw. eine große Kraft je Pol- oder Ankerelement zu erzielen, ist eine Vervielfachung der Kraft und des Induktionseffektes erwünscht. Wie die oben erwähnte Rechnung zeigt, ist die Größe der induzierten Spannung von der Breite der Eisenteile b (in Bewegungsrichtung) unabhängig. Durch Verringerung dieser Abmessung und gleichzeitiger Verringerung der Magnetbreite kann somit eine Erhöhung der Maschineneffizienz bewirkt werden. Unabhängig von der Magnetbreite und damit der Zahl von Polelementen und Magneten pro Längeneinheit ist auch der wirksame Wicklungsquerschnitt. Die Verringerung der Polbreite steht somit nicht im Zusammenhang mit einer Schwächung der Kraftwirkung je Polelement.

Für die Ankerwicklung bedeutet die Verringerung der Polteilung eine verstärkte Ausnutzung. Bei gegebener Bewegungsgeschwindigkeit v ist die Frequenz der notwendigen Stromänderungen gegeben durch v/2b. Die Kommutierungsgeschwindigkeit für die Richtungsänderung des Ankerstromes hängt von der Größe der Induktivität der Ankerwicklung ab und ist proportional der wirksamen Spannungsdifferenz. Bei der Anwendung von Permanentmagneten zur Erregung der Luftspaltflußdichte $B_o$ ist die magnetische Leitfähigkeit des Ankerkreises verhältnismäßig klein, so daß die Ankerinduktivität ebenfalls gering und bei gegebener Ankerspannung die erzielbare Kommutierungsgeschwindigkeit verhältnismäßig groß ist. Hierdurch lassen sich bei gegebener Leistungsgröße des Strom- oder Wechselrichters vergleichsweise hohe Betriebsfrequenzen erzielen. Es ist somit möglich, durch kleine Polteilungen eine hohe Kraftdichte, verhältnismäßig hohe induzierte Spannung und damit kleine Baugrößen bei hohem Wirkungsgrad zu realisieren.

Ein Vervielfachungsfaktor 2 ist dadurch erzielbar, daß entsprechend Fig. 2 anstelle einer Lücke in der Magnetbesetzung des beweglichen Teils ein in der Polarität gegenüber dem Magneten 12 nach Fig. 1 jeweils geänderter Magnet 12′ (Südpol S gegenüber dem Nordpol N) angeordnet wird. Die induzierte Spannung und die Kraftwirkung verdoppeln sich hierdurch. Die je Ankerelement erzielbare induzierte Spannung beträgt nun 2hBv; während sich die Kraftwirkung zu $F_x = 2hB_o\, \theta_a$ ergibt.

Voraussetzung für die hier angeführten Werte ist, daß im Ankerkreis keine nennenswerten Sättigungserscheinungen auftreten. Die obere Grenze für die Größe der Ankerdurchflutung $\theta_a$ folgt aus den Überlegungen zur Begrenzung des Einflusses dieser Ströme auf das magnetische Feld innerhalb der Permanentmagnete. Je nach Magnetkennlinien (Zusammenhang zwischen B und H) lassen sich für die angestrebten reversiblen Entmagnetisierungen die vom Strom $\theta_a$ erzeugten zulässigen Feldkomponenten ermitteln. Neue Magnetmaterialien hoher Energiedichte ermöglichen ähnlich wie magnetisch harte Ferrite eine Entmagnetisierung bis etwa zur Flußdichte des Magneten $B_o=0$. Dies wird in jenen Magnetteilen erreicht, bei denen das von $\theta_a$ erzeugte Gegenfeld

gleich der Leerlaufinduktion $B_o$ ist.

Offenbar ist in Anbetracht des großen magnetisch wirksamen Spaltes (Nutzsapaltes) dies im allgemeinen ein sehr hoher Grenzwert; er nimmt mit zunehmender Höhe der Permanentmagnete zu.

Bezieht man die erzielbare Kraft auf die Grundfläche der Magnete, als auf 2 h b (je Polelement), so ergibt sich die Kraftdichte zu

$$F_{Ax}=1/b \; \theta_a \; B_o$$

Im Vergleich zu den Wandlern mit longitudinalem Magnetfluß zeigt sich nun ein Faktor $1/b \; \theta_a$ anstelle des sonst bekannten Strombelags.

Da der Wicklungsstrom $\theta_a$ sehr groß gewählt werden kann, und b in Anbetracht der Leiteranordnung in Bewegungsrichtung kleiner als bei hochausgenutzten Maschinen mit longitudinalem Fluß sein darf, lassen sich grundsätzlich hohe Kraftdichten erzielen. Die Herausnahme der stromführenden Ankerspule aus der unmittelbaren Durchtrittsfläche des magnetischen Flusses im Luftspalt läßt darüber hinaus höhere mittlere Flußdichten für den Magnetkreis zu und verstärkt so zusätzlich die ausführbare Schubkraftdichte. Nimmt man als Beispiel eine von Permanentmagneten erzeugte Flußdichte von $B_o=1,0$ T im Luftspalt (bei einer Remanenzinduktion von z.B. 1,3 T) und einer Magnethöhe von 3 cm, so folgt daraus der obere Grenzwert für die Ankerdurchflutung zu etwa 30 kA. Wird eine Polteilung von 6 cm ausgeführt, so entspricht dem ein äquivalenter Strombelag von 5000 A/cm und eine Kraftdichte von 500 $kN/m^2$.

Dies ist ein Mehrfaches der mit Maschinen mit longitudinaler Flußrichtung erreichbaren Werte. Durch die weitgehend freizügige Gestaltung des Spulenquerschnittes und der Nut (außerhalb des Permanentmagneten) kann unabhängig von der Flußdichte im Luftspaltbereich die Stromdichte so gewählt werden, daß die Ankerspule mit einer noch konventionellen Kühlung betrieben werden kann. Wie sich zeigt, lassen sich bei entsprechender Wahl der Entwurfsparameter h, b, $B_o$, der Ankerdurchflutung $\theta_a$ sowie der Magnethöhe außerordentlich verlustarme Maschinen mit einfachem geometrischen Aufbau realisieren. Strombeläge der Größenordnung von 5000 A/cm lasseen sich bei Maschinen mit longitudinaler Flußrichtung nur zusammen mit Maßnahmen für eine außerordentlich intensive Kühlung (direkte Wasserkühlung) konzipieren. Bei Gleichstrommaschinen werden für Strombeläge dieser Größe bereits Supraleitungen (mit Kühlung durch flüssiges Helium) herangezogen. Mit der hier beschriebenen Maschine mit transversaler Flußführung wird noch bei der Anwendung indirekter Kühlmethoden ein Kraftdichtebereich erschlossen, der bislang nur besonderen technologischen Anstrengungen und damit letzten Endes einem Maschinenbereich größter Leistungsklassen vorbehalten war. Die neue Lösung ist dagegen auf kleine und große Leistungen anwendbar und erfordert weder aus der Sicht der Kühltechnik noch bezüglich der Herstellungstechnologie ungewöhnliche Maßnahmen. Insbesondere durch die einfache Wicklungsführung läßt sich ein gute Anpassung an die Anwendungsbedingungen erreichen.

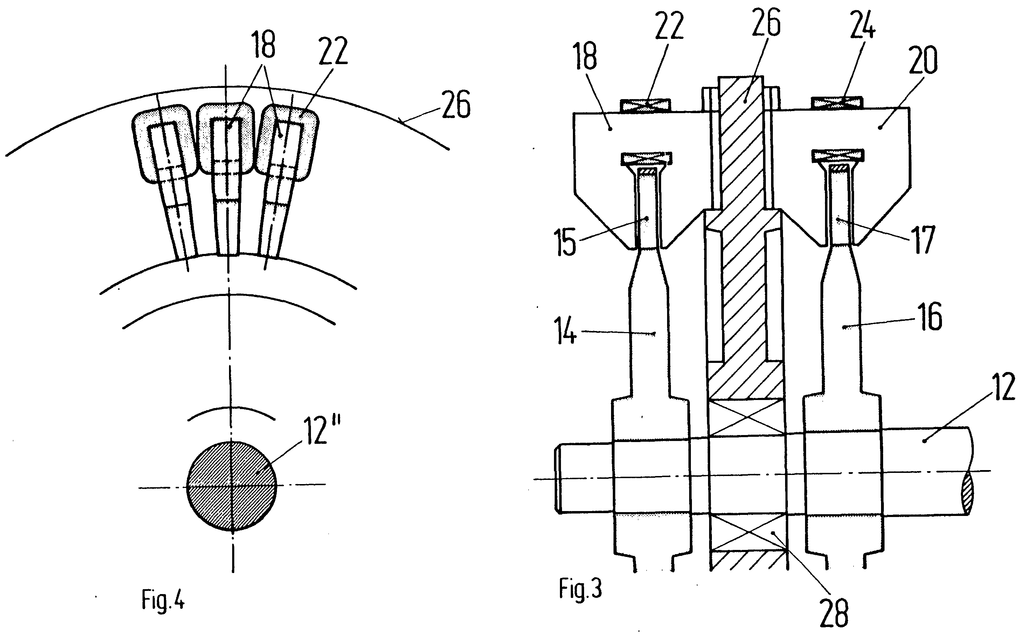

Die hier vorliegenden Funktionsbedingungen sowie die stromführenden Spulen mit Leitern in Bewegungsrichtung lassen zylinderförmige und scheibenförmige Anordnungen der Permanentmagnete auf den Läufern rotierender Maschinen zu. Bei den jetzt zu beschreibenden Ausführungsformen nach den Fig. 3 bis 8 sind die Läufer in Scheibenform ausgeführt.

Die Maschine nach Fig. 3 und 4 weist zwei Scheibenläufer 14 und 16 auf, die auf einer gemeinsamen Welle 12'' angeordnet sind und die auf ihrem Umfang Permanentmagnete 15, 17 in der oben beschriebenen Anordnung tragen, hier mit achsparalleler Flußrichtung. Den Läufern 14 und 16 sind die Polelemente 18 und 20 mit jeweils einer Ankerspule 22, 24 zugeordnet. Die Polelemente 18 und 20 sind an einem festehenden Konstruktionsteil 26 befestigt, der auch das Lager 28 für die Welle 19 enthält. Die Polelemente 18, 20 können radial von außen in das Konstruktionsteil 26 eingefügt und dort befestigt werden.

Die Scheibenform des Rotors ermöglicht einen einfachen Aufbau, wobei eine hohe Zahl von Magneten 15, 17 in Umfangsrichtung angeordnet werden kann. Die einzelnen Elemente von Rotor und Ankerkreis sind identisch ausgeführt. Die Umfangs- und Lagerkräfte werden über das Konstruktionselement 26 auf das Fundament abgestützt. Die Grundform dieser Maschine eignet sich auch als Vielscheibenanordnung.

Das einzelne Polelement erfüllt wie beschrieben die Funktion einer Wechselstrommaschine mit über die stromführende Periode nahezu konstanter induzierter Spannung. Dabei ist zu beachten, daß die in Fig. 1 mix x=o bezeichnete Magnetlage der induzierten Spannung O entspricht. In dieser Stellung umfaßt die Ankerwicklung den Maximalwert des magnetischen Flusses. Gleichbedeutend mit verschwindender induzierter Spannung ist der an dieser Stelle eintretende Rückgang der Schubkraft auf den Wert O. Soweit Kommutierungs- und Feldverlauf nicht ideal rechteckförmige Verläufe aufweisen ist im Bereich x=O daher mit einem Krafteinbruch endlicher Ausdehnung zu rechnen.

Um in der Gesamtkraft, die auf eine Läuferscheibe wirkt, diesen Kraftrückgang weitgehend auszugleichen, kann der Leiterstrang von einem Wechsel- oder Stromrichter in mehrere elektrisch voneinander unabhängige Teilstränge unterteilt werden, die mit phasenverschobenen Strömen gespeist werden. Die Spulen 22 und 24 sind demgemäß in Gruppen zusammengefaßt, die jeweils Ströme gleicher Phasenlage führen. Entsprechend dieser Phasenlage sind die zugehörigen Ankerelemente in Bezug zum Polrad (in Umfangsrichtung) versetzt angeordnet. Damit entstehen mehrphasige Anordnungen, bei denen das Polrad selbst Magnete in äquidistanter Teilung aufweist. Eine Überlapplung von Spulen verschiedener Stränge wird vermieden.

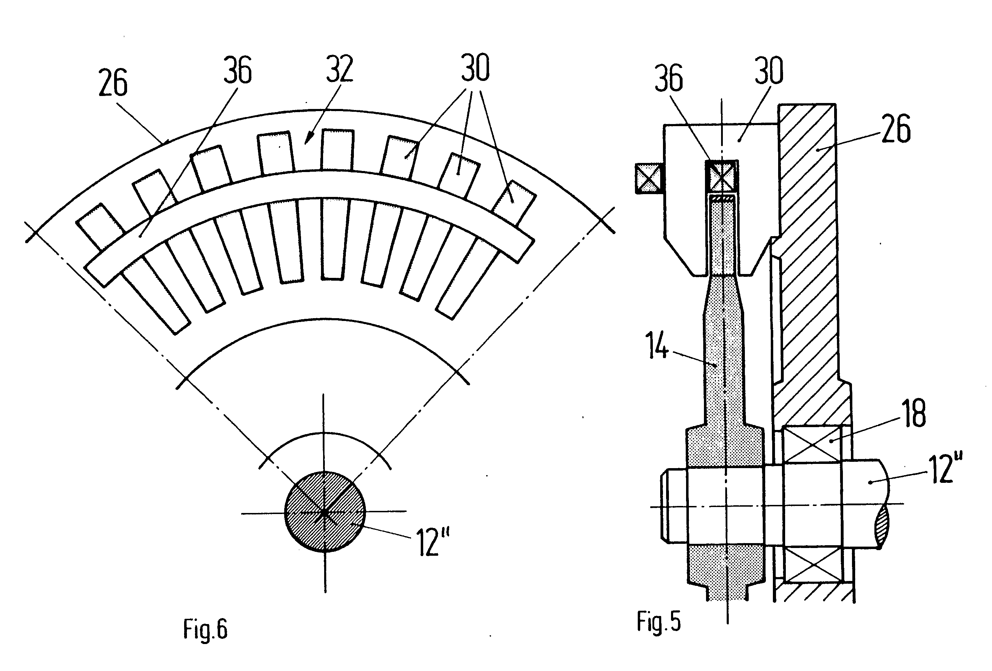

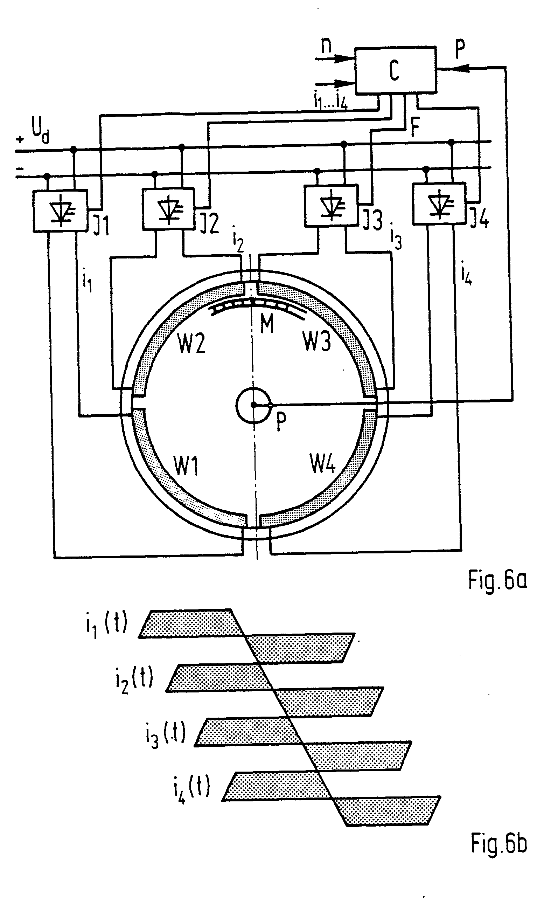

Ein besonders einfache und verlustarme Ausführung der Ankerwicklung entsteht dadurch, daß die gleichphasig betriebenen Polelemente durch Spulen gespeist werden, die in Umfangsrichtung mehrere Polelemente in einem Spulenumlauf umschließen. Je nach Größe der Maschine erscheint es dann zweckmäßig, drei, vier oder mehrere Ankereinheiten mit jeweils einer gemeinsamen Spule auszuführen. Fig. 5 zeigt hierzu das Beispiel eines in vier Ankereinheiten unterteilten Stators 30 mit Ankereinheiten 32 mit jeweils acht Polelementen 34, die eine gemeinsame Spule 36 umfassen. Die Spulen 36 der vier Ankereinheiten 32 werden mit Strömen unterschiedlicher Phasenlage betrieben und sind gegenüber den Läuferelementen räumlich versetzt angeordnet.

Ein Betrieb der Maschine ist ohne einseitigen magnetischen Zug auf die Welle auch dann noch möglich, wenn einzelne Segmente durch ihren Wechselrichter abgeschaltet oder durch eine Störung nicht betriebsbereit sind. Es erscheint ebenso möglich, z.B. bei Wicklungsschaden, ein Teilsegment (oder mehrere) radial zu entfernen, ohne daß der Läufer ausgebaut oder die gesamte Maschine demontiert werden muß. Die restlichen Segmente sind auch ohne Änderung ihrer Stromspeisung weiterhin betriebsfähig. Die Vorteile eines in dieser Form modular aufgebauten Energiewandlers liegen in seiner Einfachheit und den damit verbundenen Anpassungsformen an besondere Betriebsfälle.

Eine Schaltung mit einem Wechselrichter für die Ausführungsform nach Fig. 5 und 6 ist in Fig. 6a dargestellt. Die Schaltungsanordnung entspricht weitgehend derjenigen einer mehrsträngigen Synchronmaschine mit Wechselrichterspeisung. Die einzelnen Wicklungsstränge, die hier mit W1 bis W4 bezeichnet sind, überdecken jeweils annähernd 90° des Umfangs der Maschine. Die örtliche Verschiebung gegenüber den Magnetpolen M des Rotors beträgt zum Beispiel 1/4 der Polteilung. Dem entspricht auch der in Fig. 6b dargestellte Stromverlauf der einzelnen Stränge. Hier ist $i_1(t)$ gegenüber $i_2(t)$ um $\pi/4$ phasenverschoben, usw.

Der trapezförmige Stromverlauf entspricht in der Form dem zeitlichen Verlauf der induzierten Spannung und führt somit zu einer hohen Kraftdichte bei geringen Verlusten. Der linear dargestellte Vorgang der Stromwendung ist eine Folge des Umschaltens im jeweiligen Stromsteller I1 bis I4. In bekannter Weise sind diese Schaltelemente aus Halbleitern so aufgebaut, daß sie zwei Stromrichtungen im angeschlossenen Schaltkreis zulassen. Als Energiequelle für die Stromkreise der Wicklungsstränge ist die Gleichspannung $U_d$ vorgesehen. Diese Spannung wird über eine Speiseleitung an die Eingangsklemmen der Stromsteller $I_1$ bis $I_4$ gelegt.

Die störungsfreie Funktion der Maschine setzt bekanntlich eine Pollageerfassung P voraus, die jedem einzelnen Wicklungsstrang die relative Lage der Magneten M zu den Polelementen des Ankers vorgibt. Die Kenntnis der Pollage wird im Steuergerät C zur Bestimmung der Zündimpulse F (Ein- und Ausschaltimpulse) für die Halbleiterelemente der Stromsteller herangezogen.

Wird die Speisespannung $U_d$ als konstant angesehen, verhält sich die Maschine weitgehend ähnlich wie eine an konstanter Ankerspannung mit fest vorgegebenem Erregerstrom betriebene Gleichstrommaschine. Die Leerlaufdrehzahl ist hierdurch eine feste Größe. Der Maximalwert der Ströme $i_1$ bis $i_4$ ergibt sich wie das Drehmoment abhängig von der Drehzahl.

Um das Betriebsverhalten besser an die Betriebsbedingungen anzupassen, wird normalerweise die Stellbarkeit der Ankerströme gefordert. Dies kann allgemein durch Veränderungen der wirksamen Spannung, z.B. also durch eine Stellmöglichkeit für $U_d$ erreicht werden. Vielfach wird darauf zurückgegriffen, daß die ohnehin vorhandenen Stromsteller I1 bis I4, die für die Kommutierung des Wechselstromes benötigt werden, auch zur Stromgrößenbeeinflussung Verwendung finden.

Es wird in diesem Falle durch mehrfaches Ein- und Ausschalten die Spannung mit pausenförmigen Intervallen an die Wicklung gelegt. Der über die Halbperiode des Stromes wirksame Spannungsmittelwert kann damit verringert und der Strom in seiner Größe zwischen einem Maximalwert und 0 eingestellt werden.

In Fig. 6a ist weiter angedeutet, daß die Signalverarbeitung in Steuergerät C auch unter Einbezug der Größe der Phasenströme $i_1$ bis $i_4$ erfolgen kann. In einem geschlossenen Regelkreis, wie er etwa zur Erzielung einer konstanten Drehzahl Verwendung findet, werden diese Stromsignale benötigt. Es wird dann ein überlagerter Drehzahlregelkreis mit einer Drehzahlmessung und einem Regler verwendet, der den für den Stellvorgang notwendigen Strom ermittelt.

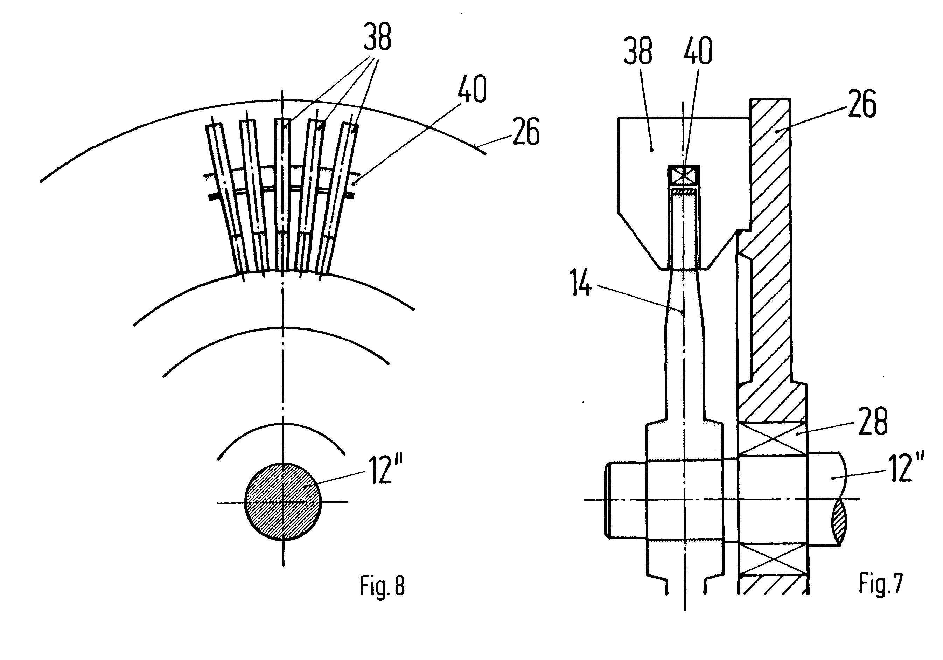

Bei einer weiteren in den Fig. 7 und 8 dargestellten Ausführungsform entstehen verringerte Wicklungsverluste dadurch, daß alle am Umfang angeordneten Polelemente 38 mit einer einzigen durchgehenden Spule 40 induktiv gekoppelt sind. In diesem Fall kann auch der bei den Ausführungen nach den Fig. 3 bis 6 erforderliche Rückschluß der Spule entfallen, so daß die Masse des nichtaktiven Leiterteils auf ein Minimum beschränkt wird. In ihrer mechanischen Anordnung ist diese Maschinenform besonders vorteilhaft; sie läßt sich auf Generatoren und Motoren in gleicher Weise übertragen. Eine mehrsträngige Anordnung kann in diesem Falle z.B. für 2- oder Mehrscheibenanordnungen verwirklicht werden.

Soll die Zahl der Pole zum Beispiel aufgrund einer Vorgabe von Frequenz und Drehzahl gering gehalten werden, so geht mit der Polzahl die Kraft je Flächeneinheit zurück. Es erscheint dann erwünscht, die Wirksamkeit der Energieumwandlung durch andere Mittel weiter zu steigern. Ein Faktor 2 kann dadurch erzielt werden, daß in den bei den beschriebenen Ausführungen vorgesehenen Zwischenräumen der Polelemente jeweils zusätzliche Magnetkreise angeordnet werden. Die in diesen zusätzlichen Polelementen erzeugten induzierten Spannungen sind im Vergleich zu denen der vorher bereits vorhandenen Elemente (bezogen auf den gleichen Wicklungssinn) entgegengerichtet. Sie verlangen also zur Erzielung eines positiven Beitrags eine besondere Wicklung bzw. eine Wicklung mit einem geänderten Anschluß an die Energieversorgung.

In den Fig. 5 bis 8 sind für vergleichbare Bauelemente die für die Ausführung nach Fig. 3 und 4 verwendeten Bezugszahlen eingetragen.

Das oben bei rotierenden Maschinen bestehende Prinzip läßt sich vorteilhaft auch bei linearen Antrieben realisieren. Hierbei stehen Anwendungen für die Transport- und Bahntechnik im Vordergrund.

Eine Ausführung eines Linearmotors ist in Fig. 9 dargestellt, der in seinem Aufbau dem Prinzip nach Fig. 1 entspricht. Um eine auch der magnetischen Tragtechnik gemäße Form für die aktiven Elemente zu erreichen, ist hier ein Schnitt zwischen den Eisenoberflächen durch den Motor gelegt, der so gewählt ist, daß das magnetische Feld im Luftspalt sowohl Trag- als auch Traktionskräfte entwickelt.

Fig. 9 zeigt einen feststehenden Stator 42 und ein dazu bewegliches Translatorelement 44. Zu erkennen sind die geradlinig ausgeführte Statorwicklung 43 und die feststehenden Polschenkel 46 mit einem Teil 12 des Joches 50, das die Wicklung 43 umgreift und das zur Unterdrückung der Wirbelströme lamelliert ist. Das Erregerteil besteht aus in Längsrichtung alternierend angeordneten Permanentmagneten 52 und die auf dem Polschenkel 54 aufliegen, der mit dem anderen Teil des Joches 50 verbunden ist. Die aus Weicheisen bestehenden Polschenkel können mit zusätzlichen Erregerspulen 56 erregt werden, wenn eine Kraftregelung vorgenommen werden soll. Hierbei wird davon ausgegangen, daß die Permanentmagnete 52 den Nominalwert des Flusses zur Erzeugung der Tragkraft und die Erregerspulen 56 den zur Stabilisierung der Tragkraft notwendigen dynamischen Feldanteil im Zusammenwirken mit einer Spaltregelung erzeugen. Es ist bekannt, daß dieses Überlagerungsprinzip zu einem dynamisch hochwertigen Tragverfahren gestaltet werden kann. Die regelbaren Tragkräfte werden somit von einem Linearmotor erzeugt, dessen Magnetfeld sowohl Trag- als auch Vortriebsfunktion simultan erfüllt. Hierdurch sind hohe Fahrgeschwindigkeiten bei geringeren Gesamtverlusten erzielbar. Es wird ein einfaches Stromführungssystem bei guter Energienutzung und günstigen Betriebsbedingungen möglich.

Zusammenfassend lassen sich die hauptsächlichen Vorteile der beschriebenen Maschinenvarianten so beschreiben:

1. Es wird die Möglichkeit geschaffen, bei sehr kleinen Maschinenabmessungen und geringen Massen für Wicklung und Magnetwerkstoffe die elektromechanische Energiewandlung zu vollziehen.

2. Die transversale Flußführung ergibt bei kleinen Polteilungen die Möglichkeit, höhere Wirkungsgrade gegenüber Maschinen mit konventioneller Flußführung zu erzielen.

3. Durch Vergrößerung der Höhe der Permanentmagnete läßt sich die Größe der anwendbaren Ankerdurchflutung und damit die Kraft je Pol steigern, so daß sehr hohe Kraftdichten erreicht werden können.

4. Trotz hoher Kraftdichte läßt die geometrische Anordnung der Wicklung moderate Stromdichten und somit konventionelle Kühlung zu.

5. Das transversale Flußführungsprinzip ermöglicht Maschinen in Scheiben-, Zylinder- und Linearbauformen.

6. Durch die Verwendung von Permanentmagneten ergibt sich eine Wicklung mit geringer Induktivität, so daß schnell kommutierende Stromkreise entstehen, die mit einer hohen Frequenz betrieben werden können.

7. Die Maschinen läßt sich in ihre Bauform den mechanischen Erfordernissen gut anpassen und läßt z.B. bei rotierenden Maschinen einen Teilbetrieb auch nach Demontage einzelner Ankereinheiten zu, da Wicklungen verwendet werden können, die sich nicht überlappen.

8. Durch die hohen Kraftdichten lassen sich vorteilhaft Direktantriebe entwerfen, die beispielsweise mit Drehzahlen von 120 min$^{-1}$ oder weniger arbeiten.

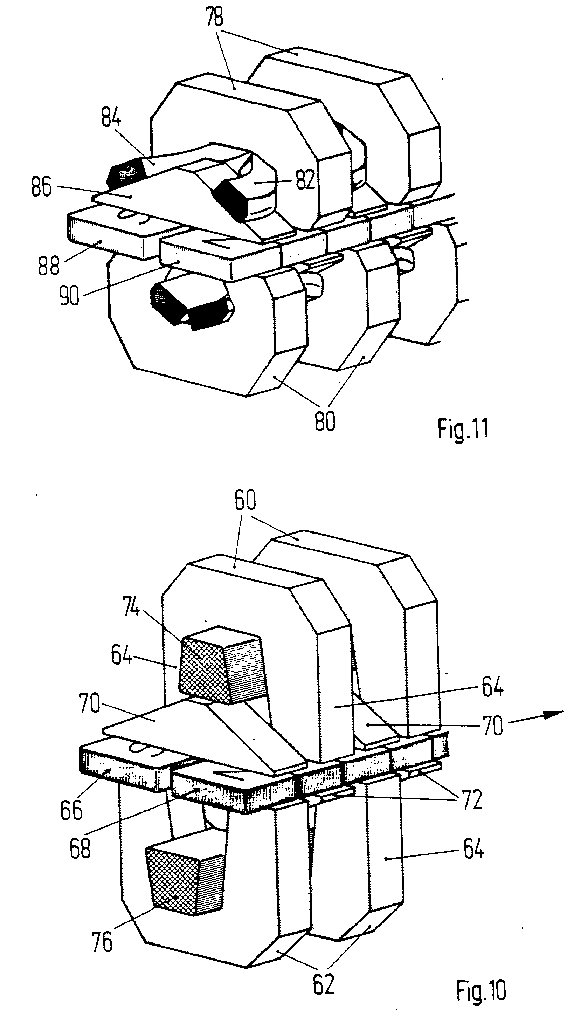

Bei den im nachstehenden zu beschreibenden Ausführungsformen nach den Fig. 10 bis 17 sind abweichend von den vorstehend beschriebenen Ausführungsformen nebeneinander zwei Reihen von Permanentmagneten vorgesehen, die dem Nutzspalt in Flachanordnung zugeordnet sind. Miteinander fluchtende Permanentmagnete der beiden Reihen sind mit entgegengesetzter Polarität angeordnet. Die Permanentmagnete sind wie bei den vorstehend beschriebenen Ausführungsformen mit dem beweglichen Teil verbunden. Diese Verbindungen sind bei den prinzipiellen Darstellungen nach den Fig. 10 bis 15 nicht dargestellt.

Fig. 10 zeigt eine doppelseitige Statoranordnung, bei der auf beiden Seiten jeweils Polelemente 60, 62 angeordnet sind, die mit den Stirnseiten ihrer Polschenkel 64 jeweils über einer der beiden Reihen 66, 68 von Permanentmagneten liegen. Die Teilung und damit die Polbreite in Bewegungsrichtung entspricht der Breite der Permanentmagnete in Bewegungsrichtung, die durch einen Pfeil wiedergegeben ist.

Die Polelemente 60 bzw. 62 sind jeweils in Abständen angeordnet, die der der doppelten Teilung entsprechen. Die Polelemente 60 bzw. 62 auf den gegenüberliegenden Seiten der Permanentmagnete sind dabei jeweils um eine Teilung versetzt. Auf der den Polelementen gegenüberliegenden Seite der Permanentmagnetreihen sind jeweils magnetische Rückschlußelemente 70, 72 angeordnet. Von den Polelementen 60 auf der einen Seite und den Polelementen 62 auf der anderen Seite wird jeweils ein Strang 74, 76 einer Wicklung umschlossen. Diese Stränge erstrecken sich in Bewegungsrichtung und führen Ströme entgegengesetzter Richtungen. Sie können als Strangelemente einer Spule, die in vorbestimmten Abständen miteinander verbunden sind, ausgeführt werden. Da die Ankerströme in den Leitersträngen 74, 76 damit in Gegenphase (180°-Phasenverschiebung) sind, entsteht so das erforderliche alternierende Ankerfeld. Die Leiterstränge 74 und 76 sind zwischen den Polelementen jeweils über die Rückschlußelemente 70, 72 hinweggeführt.

Die Anordnung nach Fig. 10 ermöglicht hohe Nuträume, die allerdings zu relativ großen Abmessungen der Polelemente führen. Zu beachten ist hier weiter die Größe der zwischen den Polelementen auftretenden magnetischen Streuflüsse.

Die Ausführungsform nach Fig. 11 unterscheidet sich von der nach Fig. 10 im wesentlichen durch eine verringerte Höhe der Polelemente 78 bzw. 80. Diese Verringerung der Polelemente wird möglich durch die Aufteilung der Ankerwicklung in zwei Leiter 82, 84, die jeweils gleichgerichtete Ankerströme führen. Die beiden Teilleiter 82 und 84 sind über die magnetischen Rückschlußelemente 86 im Bereich von deren Schrägflächen geführt. Um dies zu ermöglichen, sind die beiden Teilleiter 82 und 84 jeweils mäanderband- oder wellenförmig angeordnet. Dies führt gegenüber dem gerade geführten Leiter nach Fig. 10 zwar zu einer geringen Verlängerung des Leiters. Als Vorteil ist jedoch herauszustellen, daß die zwischen den Polen auftretenden magnetischen Streuflüsse geringer sind. Bei der Ausführungsform nach Fig. 11 beschränkt sich der Streufluß überwiegend auf die unter den Leitern liegenden Polbereiche, während oben und zur Mitte hin zwischen den Leitern kaum Streufelder auftreten. Die gleichgerichtete Durchflutung der beiden Teilleiter 82 und 84 bewirkt allerdings innerhalb der Polelemente 78 bzw. 80 in deren Nutbereich ein quer zur Bewegungsrichtung verlaufendes Streufeld. Diese "Nutstreuung" ist im Vergleich zu derjenigen einer konventionellen Anordnung jedoch vergleichsweise klein, da die Nut sehr breit und das Polelement selbst in Bewegungsrichtung kurz ausgeführt ist. Zu erwähnen ist weiter der geringere Materialbedarf für die Polelemente.

Die beiden Reihen 88 und 90 der Permanentmagnete sind hier in gleicher Weise angeordnet wie bei der Ausführung nach Fig. 10. Es ist möglich, die Ausführungsformen nach Fig. 10 und 11 auch mit einseitiger Ankeranordnung auszubilden. Es wird dann unter den beiden Magnetreihen ein ebenes Weicheisenteil als Rückschlußelement für den magnetischen Fluß verwendet. Die stromführenden Spulen und Ankerelemente sind auf der gegenüberliegenden Seite angeordnet. Die bei den Ausführungen nach Fig. 10 und 11 als magnetische Rückschlüsse wirkenden Teile 70, 72 bzw. 86 übernehmen in diesem Fall die Funktion einer Feldabschirmung für den entsprechenden Polbereich. Die von den aktiven Elementen erregten Streuflußkomponenten treten hierdurch nicht in den Bereich der Permanentmagnete ein, sondern werden von den Schirmen aufgenommen und zum Nachbarpol zurückgeführt. Diese Schirmwirkung ist besonders vorteilhaft, wenn kleine Polteilungen verwendet werden und die Magnethöhe relativ groß ist und in die Größenordnung der Polteilung kommt. Da bei einseitiger Anordnung das den Magneten durchsetzende Ankerfeld nicht vorhanden ist, lassen sich die magnetischen Schirme mit etwas kleinerem Querschnitt dimensionieren als die als Rückschlußelemente wirkenden Elemente nach Fig. 10 und 11.

Es ist im allgemeinen zweckmäßig, zur Begrenzung des in den magnetischen Schirmen erzeugten Flusses den Abstand der Schirme zu den Magneten größer zu wählen als den Nutzspalt zwischen den aktiven Polelementen und der Magnetoberfläche. Die Anordnung eines zusätzlichen magnetisch wirksamen Spalts im Bereich der Schirmmitte kann den in Querrichtung verlaufenden Fluß der Permanentmagnete schwächen, allerdings mit negativer Rückwirkung auf die Streuflußumlenkung durch den Schirm.

Mit der doppelseitigen Anordnung der Polelemente und Spulen wird die Große der Kraftwirkung verdoppelt.

Zur Unterdrückung von Wirbelströmen und Eisenverlusten sind alle dem Ankerkreis zugehörigen Elemente geblecht oder in Pulvertechnologie ausgeführt.

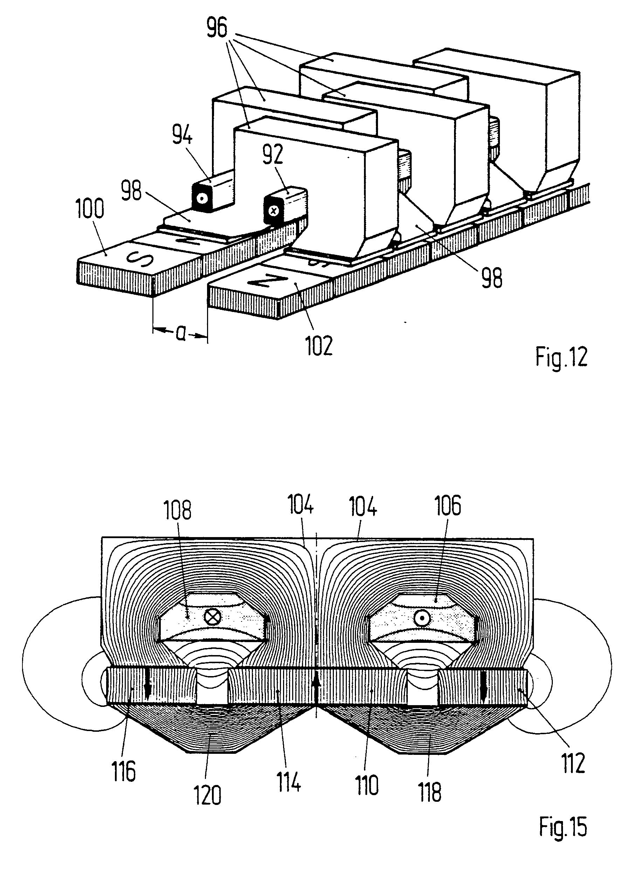

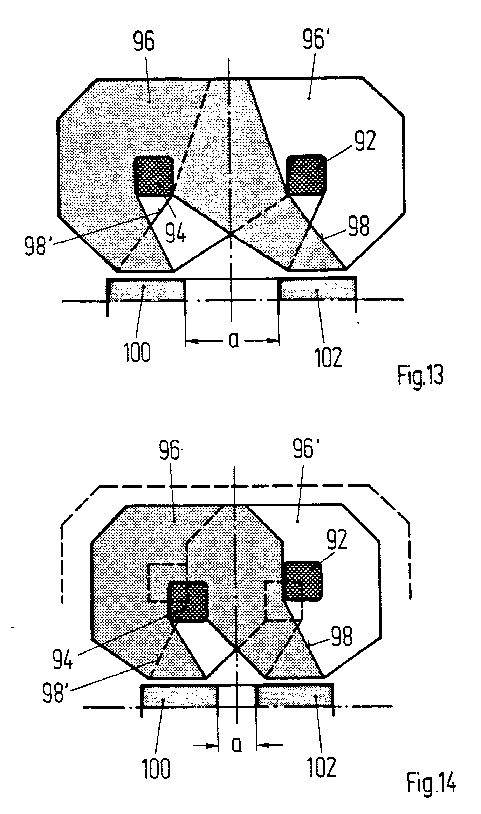

In Fig. 12 ist eine hinsichtlich des Feldverlaufs weitgehend symmetrische und in Bewegungsrichtung alternierende wirkende Anordnung mit zwei nebeneinanderliegenden Ankerleitern 92, 94 dargestellt, die gegensinnig vom Ankerstrom durchflossen werden. Die Polelemente 96 sind hier jeweils quer zur Bewegungsrichtung versetzt angeordnet, und zwar derartig, daß von jedem Polelement alternierend nur einer der beiden Ankerleiter 92 bzw. 94 umschlossen wird. Die Anordnung bedingt, daß jeweils einer der Polschenkel 98 seitlich vom Polelement vorsteht, wie aus Fig. 12 ersichtlich. Über diesen Polschenkel 98 ist dann jeweils der zweite Ankerleiter hinweggeführt. Diese Anordnung kann einen größeren Abstand a der beiden Reihen 100, 102 der Permanentmagnete bedingen. Die Ströme der beiden Ankerleiter 92 und 94 sind antiparallel. Sie können also Teile einer Spulen sein. Die Form der Polelemente 96 ist gleich. Die Polelemente werden jedoch alternierend um 180° gewendet montiert. Auch die Ausführungsform nach Fig. 12 eignet sich gut für eine doppelseitige Anordnung zur Verdoppelung der Kraftwirkung. Fig. 13 zeigt eine Stirnansicht benachbarter Polelemente mit geraden Ankerleitern, im wesentlichen entsprechend der Ausführungsform nach Fig. 12. Streufeldkomponenten treten insbesondere in den sich unterhalb der Ankerleiter gegenüberstehenden Teile der Schenkel der Polelemente auf, während im Raum oberhalb und zwischen den Ankerleitern das Streufeld verschwindet. Innerhalb der Polelemente tritt eine Nutstreuung bei verkürzter Nutlänge auf.

Während bei der Ausführungsform nach den Fig. 12 und 13 eine gerade Führung der Ankerleiter 92 und 94 vorgesehen ist, zeigt Fig. 14 eine Ausführungsform, bei der die Ankerleiter wie bei der Ausführungsform nach Fig. 11 wellen- oder mäanderbandförmig geführt sind. Wie in Fig. 14 dargestellt, sind die Ankerleiter jeweils in dem Bereich, in dem sie von den Polelementen umschlossen werden, in kleinerem Abstand und in geringerer Höhe über dem Nutzspalt angeordnet als in den Bereichen, in denen sie außen an einem Polelement vorbeigeführt sind. In Fig. 14 sind die Leiterquerschnitte im Bereich des teilweise verdecktliegenden Polelementes gestrichelt dargestellt, ebenso wie deren verdeckt liegende Außenkonturen. Bei der Ausführungsform nach Fig. 14 werden geringere Abmessungen der Polelemente erzielt, wie durch den gestrichelt dargestellten Vergleichsquerschnitt der Anordnung nach Fig. 13 wiedergegeben. Weiter läßt sich bei dieser Ausführungsform der Abstand a der beiden Magnetreihen 100, 102 verringern.

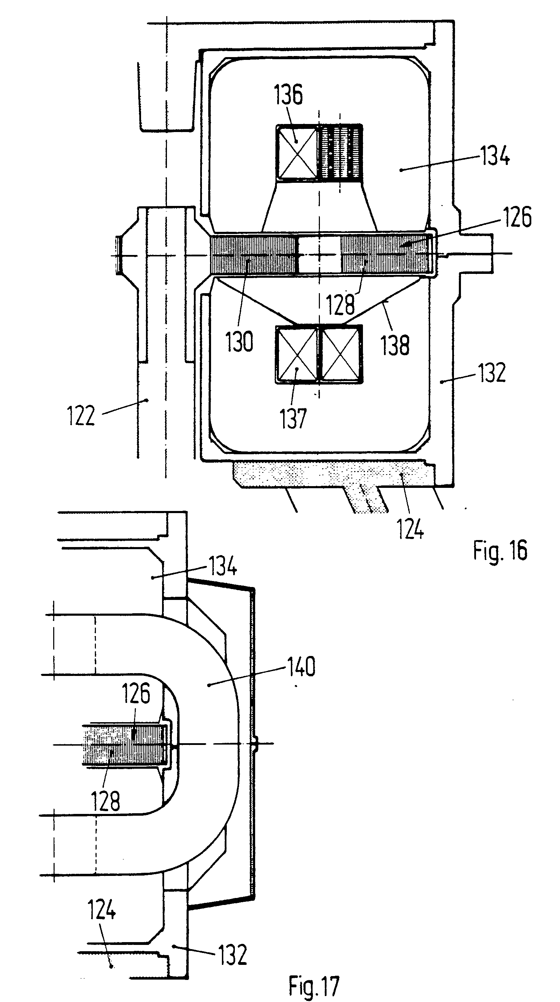

Bei der Ausführungsform nach Fig. 15 sind nebeneinander zwei ähnliche Ankerteile mit Polelementen 104 vorgesehen, die hier, wie durch die gestrichelte Teilungslinie angedeutet, aus zwei Polteilen zusammengesetzt, aber auch einteilig ausgeführt sein können. Von den beiden Polelementen 104 wird jeweils ein Ankerleiter 106, 108 umschlossen, in denen Ströme in entgegengesetzter Richtung fließen. Die beiden Ankerleiter können damit Teile einer ebenen Spule sein, die in Querrichtung an ihren beiden Enden geschlossen ist. Diese Anordnung ergibt damit verhältnismäßig kleine effektive Wicklungslängen und geringe Verluste. Die beiden nebeneinander angeordneten Ankerteile arbeiten mit jeweils zwei Reihen 110, 112 und 114, 116 zusammen, von denen die äußeren Magnetreihen und die beiden inneren Magnetreihen jeweils gleiche Polarität haben, wie durch die Pfeile dargestellt. Unterhalb der beiden Reihen sind jeweils magnetische Rückschlußelemente 118, 120 vorgesehen. Wie aus den eingezeichneten Feldlinien ersichtlich, ist die Platzausnutzung für die Magnetkreise und auch für die Stromkreise sehr günstig. Auch die Ausführungsform nach Fig. 15 läßt sich, wie die Ausführungsform nach Fig. 10 und 11, zweiseitig ausbilden.

Die vorstehend beschriebenen Ausführungsformen sind als Linearantriebe dargestellt und beschrieben. Sie lassen sich aber auch ohne weiteres als rotierende Maschinen ausbilden. Ein Beispiel hierfür ist in Fig. 16 und 17 dargestellt. In Fig. 16 ist im Schnitt ein Teil einer rotierenden Maschine dargestellt. Diese weist einen Rotor 122 auf, der mit einer in der Zeichnung nicht dargestellten Welle verbunden ist, die in einem festen Gehäuse 124 gelagert ist, von dem auch nur ein Teil wiedergegeben ist. Der Rotor 122 trägt an seinem äußeren Umfang beidseitig jeweils einen zylindrischen Käfig 126 mit Ausnehmungen 128 und 130, die axial im Abstand voneinander liegen und zur Aufnahme von Permanentmagneten zweier benachbarter Magnetreihen dienen. Die Permanentmagnete können in den Käfig eingeklebt werden. Insbesondere bei Direktantrieben mit geringer Drehzahl, beispielsweise im Bereich

von 100 min$^{-1}$ sind bei einer solchen Bauweise Schwierigkeiten durch auftretende Fliehkräfte nicht zu erwarten. Ein zweiter zylindrischer Käfig entsprechend dem Käfig 126 ist auf der linken Seite des Rotors 122 befestigt.

In dem Gestell 124 ist ein Gehäuse 132 eingesetzt, in dem der Ankerteil der Maschine untergebracht ist. Dieser Ankerteil ist hier ähnlich der Ausführungsform nach Fig. 10 ausgebildet mit Polelementen 134, von denen die Ankerleiter 136 umschlossen werden. Auf der dem Polelement 134 jeweils gegenüberliegenden Seite der Permanentmagnete sind jeweils die magnetischen Rückschlußelemente 138 angeordnet. Die Polelemente können auch geteilt ausgeführt sein, wenn dies für die Montage zweckmäßig oder notwendig ist. Der Ankerstrom fließt in den Ankerleitern 136 und 137 jeweils antiparallel. Die beiden Ankerleiter können damit Teile einer Spule sein. Zur Herstellung der Verbindung sind die Ankerleiter, wie in Fig. 17 dargestellt, an ihren Enden seitlich herausgeführt, wobei der Wicklungskopf 140, wie in Fig. 17 dargestellt, seitlich aus dem Ankergehäuse herausgeführt werden kann. In diesem Bereich können dann auch die Anschlüsse für den Wechselrichter vorgesehen werden.

Bei den beschriebenen Ausführungsformen kann der Ankerfeldeinfluß durch Wahl der Höhe der Permanentmagnete gesteuert werden. Durch eine Begrenzung des Ankerfeldeinflusses durch Vergrößerung der Höhe der Permanentmagnete kann gleichzeitig die Kommutierungszeit und deren Einfluß auf die erzielbare mittlere Schubkraft limitiert werden.

Eine Beeinflussung des Streufeldes zwischen benachbarten Polelementen kann durch erreicht werden, daß das magnetische Rückschlußelement mit einem Jochteil versehen wird, das zwischen den beiden Leitersträngen nach oben gerichtet ist und sich bis zur Oberkante der Polelemente erstrecken kann. Auf diese Weise lassen sich Flußkomponenten direkt in das benachbarte Polelement einleiten. Hierdurch wird zwar eine gewisse Longitudinalkomponente eingeführt. Diese ist jedoch hinsichtlich des Streufeldes günstig und hinsichtlich der sonstigen Wirkung tolerierbar.

Aufgrund der geringen Masse des Läufers, sei er als Rotor oder Translator ausgebildet, der überwiegend nur aus den Permanentmagneten besteht, sind mit den beschriebenen Maschinen hohe Läuferbeschleunigungen erreichbar.

Abschließend sei noch einmal auf folgende Vorteile gegenüber konventionellen Anordnungen hingewiesen:

Es lassen sich größere Spulenquerschnitte bei günstiger Nutform ausführen.

Es sind verhältnismäßig kleine Polteilungen ausführbar.

Die Leiterlänge reduziert sich auf die doppelte Maschinenlänge bzw. den doppelten Maschinenumfang, ist also verhältnismäßig klein.

Der magnetisch notwendige Querschnitt kann freizügiger bemessen werden und hängt wesentlich weniger vom Leiterquerschnitt ab, so daß eine weitgehende Entkopplung zwischen magnetischen und elektrischen Entwurfsparametern erzielt wird und größere Flußdichten im Polbereich zulässig sind.

## Patentansprüche

1. Stromrichtergespeiste Synchronmaschine mit Permanentmagnet-Erregung mit einem beweglichen Erregerteil mit einer Mehrzahl von Permanentmagneten (66, 68; 88, 90; 100, 102) mit wechselnder, senkrecht zum Nutzspalt verlaufender Polarisierung, die sich quer zur Bewegungsrichtung erstrecken,

mit einem Stator mit Polelementen (60, 62, 78, 80, 96), die aus Weicheisen bestehen, deren Teilung in Bewegungsrichtung mit der Teilung der Permanentmagnete identisch ist, und die an den Nutspalt angrenzen,

mit einer Ankerwicklung (74, 76; 82, 84; 92, 94) im Stator, die mit wenigstens einem sich in Bewegungsrichtung des Erregerteils erstreckenden Leiterstrang ausgebildet ist, der von den Polelementen teilweise umschlossen ist, wobei über die Breite des Nutzspaltes gleiche Relativgeschwindigkeiten zwischen Erregerteil und Stator, vorliegen dadurch gekennzeichnet,

daß das bewegliche Erregerteil mit zwei Reihen von in Bewegungsrichtung aneinandergrenzenden Permanentmagneten (66, 68; 88, 90; 100, 102) mit gleicher Teilung versehen ist,

daß die beiden Reihen quer zur Bewegungsrichtung in Achsrichtung im Abstand voneinander liegen und miteinander fluchten, wobei quer zur Bewegungsrichtung fluchtende Permanentmagnete entgegengesetzte Polarität aufweisen,

daß die Polelemente (60, 62; 78, 80; 96) in voneinander getrennte, im wesentlichen U-förmige Einheiten unterteilt sind und die Pole eines Elementes jeweils über den quer zur Bewegungsrichtung fluchtenden Permanentmagneten entgegengesetzter Polarität liegen,

und daß auf der den Polelementen gegenüberliegenden Seite des Nutzspaltes magnetische Rückschlüsse (70, 72; 86) vorgesehen sind, wobei der magnetische Fluß transversal zur Bewegungsrichtung geführt ist.

2. Synchronmaschine nach Anspruch 1, dadurch gekennzeichnet, daß die Polelemente (60, 62, 78, 80) mit doppelter Polteilung abwechselnd gegenüberliegend auf einer der beiden Seiten des Nutspaltes angeordnet sind.

3. Synchronmaschine nach Anspruch 2, dadurch gekennzeichnet, daß auf beiden Seiten des Nutspaltes jeweils ein Leiterstrang (74, 76; 82—85) der Ankerwicklung angeordnet ist, wobei die Leiterstränge gegensinnig vom Strom durchflossen sind.

4. Synchronmaschine nach Anspruch 2, dadurch gekennzeichnet, daß auf beiden Seiten des Nutspaltes jeweils zwei parallele Leiterstränge (82, 84; 83, 85) der Ankerwicklung vorgesehen sind, die jeweils beide von den Polelementen (78, 80) übergriffen werden.

5. Synchronmaschine nach Anspruch 1, dadurch gekennzeichnet, daß die Polelemente (96) einseitig im Abstand der Polteilung angeordnet sind, daß zwei gegensinnig vom Strom durchflossene Leiterstränge (92, 94) der Ankerwicklungen quer zur Bewegungsrichtung des Erregerteils im Abstand voneinander angeordnet sind und daß die Polelemente (96) abwechselnd quer zur Bewegungsrichtung seitliche so versetzt ausgebildet sind, daß die Polelemente abwechselnd einen der beiden Leiterstränge (92, 94) übergreifen.

6. Synchronmaschine nach Anspruch 5, dadurch gekennzeichnet, daß die Aufnahmen für die Ankerwicklungen (92, 94) in aufeinander folgenden Polelementen (96, 96') seitlich und in der Höhe gegeneinander versetzt angeordnet sind.

7. Synchronmaschine nach Anspruch 1, dadurch gekennzeichnet, daß nebeneinander zwei Doppelreihen von Permanentmagneten (110, 112; 114, 116) vorgesehen sind, wobei die Permanentmagnete (114, 116) der beiden mittleren Reihen gleiche Polarität aufweisen, daß für jede Doppelreihe von Permanentmagneten ein Leiterstrang (106, 108) der Ankerwicklung vorgesehen ist, daß der Leiterstrang jeweils gegensinnig vom Strom durchflossen und jeweils von quer zur Bewegungsrichtung miteinander fluchtenden Polelementen (104) übergriffen werden und daß jedem Polelement gegenüberliegend ein magnetischer Rückschluß (118, 120) vorgesehen ist.

8. Synchronmaschine nach Anspruch 7, dadurch gekennzeichnet, daß die Permanentmagnete (110, 114) der mittleren Reihe einstückig mit doppelter axialer Ausdehnung der äußeren Reihen ausgebildet sind.

9. Synchronmaschine nach Anspruch 7, dadurch gekennzeichnet, daß miteinander fluchtende Polelemente (104) einstückig ausgebildet sind.

10. Synchronmaschine nach Anspruch 1, dadurch gekennzeichnet, daß auf einem scheibenförmigen Rotor (122) beidseitig zylinderringförmige Aufnahmen (126) für jeweils zwei Reihen von Permanentmagneten (130, 138) mit entgegengesetzter Polarität vorgesehen sind.

## Revendications

1. Machine synchrone alimentée par convertisseur, à excitation par aimants permanents, avec une partie mobile d'excitation avec une pluralité d'aimants permanents (66, 68; 88, 90; 100, 102), à polarisation alternée perpendiculairement à l'entrefer, qui s'étendent transversalement par rapport à la direction du mouvement, avec un stator avec des éléments polaires (60, 62; 78, 80, 96) constitués par des fers doux, dont le pas dans le sens du mouvement est identique à celui des aimants permanents et qui sont contigus à l'entrefer, avec dans le stator un enroulement d'induit (74, 76; 82, 84; 92, 94) configuré avec au minimum un faisceau de conducteurs s'étendant dans le sens du mouvement de la partie d'excitation et partiellement entouré par des éléments polaires, les mêmes vitesses relatives existant entre la partie d'excitation et le stator sur la largeur de l'entrefer, caractérisé en ce que la partie mobile d'excitation est pourvue de deux lignes d'aimants permanents (66, 68; 88, 90; 100, 102) contigus dans le sens du mouvement et de même pas, en ce que les deux lignes se situent à distance l'une de l'autre en direction axiale transversalement au sens du mouvement et s'alignent l'une avec l'autre, les aimants permanents alignés transversalement par rapport au sens du mouvement présentant une polarité opposée, en ce que les éléments polaires (60, 62, 78, 80, 96) sont subdivisés en unités indépendantes en forme de U pour l'essentiel et que les pôles d'un éléments se situent respectivement au dessus d'aimants permanents alignés transversalement par rapport au sens du mouvement et de polarité opposée et en ce que des culasses magnétiques (70, 72, 86) sont prévues sur la face de l'entrefer opposée aux éléments polaires, le flux magnétique étant acheminé transversalement par rapport à la direction du mouvement.

2. Machine synchrone selon la revendication 1, caractérisée en ce que les éléments polaires (60, 62; 78, 80) avec un pas polaire double sont placés de manière alternée et opposée sur l'un des deux côtés de l'entrefer.

3. Machine synchrone selon la revendication 2, caractérisée en ce qu'un faisceau de conducteur (74, 76; 82, 85) de l'enroulement d'induit est placé respectivement sur les deux côtés de l'entrefer, les fourreaux de conducteurs étant parcourus en sens inverse par le courant.

4. Machine synchrone selon la revendication 2, caractérisée en ce que deux faisceaux de conducteurs parallèles (82, 84; 83, 85) de l'enroulement d'induit sont respectivement prévus sur les deux côtés de l'entrefer et sont respectivement, par deux, recouverts par les éléments polaires (70, 80).

5. Machine synchrone selon la revendication 1, caractérisée en ce que les éléments polaires (96) sont placés d'un seul côté à distance du pas polaire, en ce que deux faisceaux de conducteurs (92, 94) des enroulements d'induit parcourus en sens inverse par le courant sont placés à distance l'un de l'autre transversalement au sens du mouvement de la partie d'excitation et en ce que les éléments polaires (96) sont, transversalement au sens du mouvement, alternativement décalés latéralement de manière qu'ils recouvrent alternativement l'un des deux faisceaux déconducteurs (92, 94).

6. Machine synchrone selon la revendication 5, caractérisée en ce que les logements des enroulements d'induit (92, 94) sont dans les éléments polaires (96, 96') qui se suivent, décalés latéralement et en hauteur l'un par rapport à l'autre.

7. Machine synchrone selon la revendication 1, caractérisée en ce que l'on à prévu côte à côte deux rangées doubles d'aimants permanents (110, 112; 114, 116), les aimants permanents (114, 116) des deux rangées médianes présentent la même polarité, en ce qu'un faisceau de conducteur (106, 108) d'enroulement d'induit est prévu pour chaque rangée double d'aimants permanents, en ce que les faisceaux conducteurs sont respectivement parcourus en sens inverse par le courant et recouverts par des éléments polaires (104) alignés ensemble transversalement par rapport au sens du mouvement et en ce que l'on a prévu une culasse magnétique arrière (118, 120) opposée à chaque élément polaire.

8. Machine synchrone selon la revendication 7, caractérisée en ce que les aimants permanents (110, 114) des rangées médianes sont réalisés d'un seul tenant avec une double extension axiale des rangées extérieures.

9. Machine synchrone selon la revendication 7, caractérisée en ce que les éléments polaires (104) alignés ensemble sont réalisés en un seul tenant.

10. Machine synchrone selon la revendication 1, caractérisée en ce que sur un rotor en forme de disque (122), l'on a prévu des deux côtés des logements de forme cylindrique (126) pour deux rangées respectives d'aimants permanents (130, 138) de polarités opposées.

**Claims**

1. Current converter-fed synchronous machine with permanent magnet excitation

with a moving exciter part with a plurality of permanent magnets (66, 68; 86, 90; 100, 102) extending transversely to the direction of movement, whose polarity is alternating and directed perpendicularly to the direction of movement,

with a stationary armature part with pole elements (60, 62; 78, 80; 96) consisting of soft iron, whose pitch in the direction of movement is identical to the pitch of the permanent magnets and which adjoin the useful air gap,

with an armature winding (74, 76; 82, 84; 92, 94) in the stationary armature part having at least one conductor strand extending in the direction of movement of the exciter part, said conductor strand being partially enclosed by the pole elements, with the relative speeds between exciter part and stationary armature part being identical over the width of the useful air gap, characterized in

that the moving exciter part is provided with two rows of permanent magnets (66, 68; 88, 90; 100, 102) with identical pitch adjoining each other in the direction of movement,

that the two rows are arranged transversely to the direction of movement in axial direction at a distance from one another and in alignement with one another, with the permanent magnets in alignment with one another transversely to the direction of movement having opposite polarity;

that the pole elements (60, 62; 78, 80; 96) are constructed as separate, principally U-formed units and the poles of one element are arranged above the permanent magnets with opposite polarity in alignement transversely to the direction of movement,

and that magnetic return elements (70, 72; 86) are provided on the side of the useful air gap lying opposite to the pole elements, with the magnetic current flowing transversely to the direction of movement.

2. Synchronous machine according to claim 1 characterized in that the pole elements (60, 62; 78, 80) with double pitch are arranged alternately opposite on one of the two sides of the useful air gap.

3. Synchronous machine according to claim 2 characterized in that one conductor strand (74, 76; 82—85) of the armature winding is arranged on each side of the useful air gap, with the current flowing through the conductor strands in opposite directions.

4. Synchronous machine according to claim 2 characterized in that on each side of the useful air gap two conductor strands (82, 84; 83, 85) of the armature winding are arranged which are both enclosed by the pole elements (78, 80).

5. Synchronous machine according to claim 1 characterized in that the pole elements (96) are arranged on one side at the pitch distance, that two conductor strands (92, 94) of the armature winding, through which the current flows in opposite directions, are arranged transversely to the direction of movement of the exciter part at a distance from one another, and that the pole elements (96) are alternately constructed to be laterally offset transversely to the direction of movement in such a way that the pole elements alternately enclose one of the two conductor strands (92, 94).

6. Synchronous machine according to claim 5 characterized in that the receptacles for the armature windings (92, 94) in subsequent pole elements (96, 96') are arranged laterally and vertically offset.

7. Synchronous machine according to claim 1 characterized in that two rows of permanent magnets (110, 112; 114; 116) are provided side by side, with the permanent magnets (114, 116) of the two centre rows having the same polarity, that one conductor strand (106, 108) of the armature winding is provided for each double row of permanent magnets, that the current flows in opposite direction through the conductor strand and the conductor strand is enclosed by pole elements (104) in alignment with one another transversely to the direction of movement and that a magnetic return (118, 120) is provided opposite to each pole element.

8. Synchronous machine according to claim 7 characterized in that the permanent magnets (110, 114) of the centre row are constructed of one piece with double axial extension of the outer rows.

9. Synchronous machine according to claim 7 characterized in that the pole elements (104) aligning with one another are constructed of one piece.

10. Synchronous machine according to claim 1 characterized in that on both sides of a disk-shaped rotor (122) cylinder-ring-shaped receptacles (126) are each arranged for two rows of permanent magnets (130, 138) with opposite polarity.

Fig.1

Fig.2

Fig.4

Fig.3

EP 0 243 425 B1

EP 0 243 425 B1

26  36  32  30

36  30

26

14

18

12"

12"

Fig.6

Fig.5

Fig.6a

Fig.6b

Fig.7

Fig.8

Fig.9

Fig.11

Fig.10

Fig.12

Fig.15

Fig.13

Fig.14

Fig. 16

Fig. 17